# EUROPEAN PATENT APPLICATION

(11) **EP 4 844 399 A1**
(43) Date of publication of application: **25.11.2026**
(21) Application number: 24918487.0
(22) Date of filing: 10.12.2024
(51) Int. Cl.: G01N 31/00, G01N 27/26, G01N 30/02

(54) **SAMPLE ANALYSIS METHOD AND SOLUTION PREPARATION DEVICE**

(30) Priority: 16.01.2024 JP 2024004445
(71) Applicant: Nittoseiko Analytech Co., Ltd., Kanagawa 242-0007 (JP)
(72) Inventor: HAYASHI Norio, Yamato-shi, Kanagawa 242-0007 (JP); MURATA Hiroyuki, Yamato-shi, Kanagawa 242-0007 (JP)
(74) Representative: Winter, Brandl - Partnerschaft mbB
(86) International application number: PCT/JP2024/043572
(87) International publication number: WO 2025/154430

(57) **Abstract**

The present invention enables highly accurate analysis of the content of sulfur and/or halogens in a sample using a calibration curve of an IC (ion chromatograph) analyzer or the like, without using reagents such as hydrogen peroxide and hydrazine.

In preparing an absorbing solution to be introduced into the analyzer, an absorption tube equipped with electrodes for electrolysis is used, and the absorbing solution accommodated in the absorption tube is electrolyzed to oxidize or reduce target components in the absorbing solution, which is introduced into the analyzer.

## Description

### TECHNICAL FIELD

The present invention relates to a method for analyzing the content of sulfur and/or halogens in a sample using a calibration curve of an ion chromatograph analyzer or the like, and a solution preparation device used therein.

### BACKGROUND ART

In quantitative analysis of sulfur and/or halogens in a sample using an ion chromatograph (hereinafter also referred to as "IC"), the sample is thermally decomposed, and the gasified analysis target components are recovered in an absorbing solution. The absorbing solution is then introduced into an IC analyzer as a solution to be analyzed.

When sulfur compounds or halogen compounds gasified by combustion decomposition through the thermal decomposition are recovered in an absorbing solution and analyzed using an IC analyzer, it is necessary to oxidize all sulfite ions generated in the absorbing solution to sulfate ions, while free halogens and oxoacid ions need to be reduced to halide ions before being introduced into the IC analyzer.

As a treatment for oxidizing or reducing the ions contained in the absorbing solution, it is known to add an oxidizing agent such as hydrogen peroxide or a reducing agent such as hydrazine hydrate to the absorbing solution (see, for example, Patent Literature 1).

### CITATION LIST

### PATENT LITERATURE

Patent Literature 1: JP2010-156568A

### SUMMARY OF THE INVENTION

### PROBLEM TO BE SOLVED BY THE INVENTION

Hydrogen peroxide, which is an oxidizing agent added to the absorbing solution, and hydrazine, which is a reducing agent, are highly reactive and toxic, and are thus extremely dangerous substances designated as deleterious or poisonous substances. Therefore, the handling requires extreme caution, and storing the reagents demands considerable effort.

Furthermore, in measuring an absorbing solution containing hydrogen peroxide or hydrazine using an IC analyzer, signals derived from these components appear on the chromatogram, which interferes with the measurement of fluoride ions. It may also damage the column. Therefore, there is a need for a method for preparing a solution without using these additives.

In view of such problems of the conventional technology, an object of the present invention is to enable highly accurate analysis of the content of sulfur and/or halogens in a sample using a calibration curve of an IC analyzer or the like, without using reagents such as hydrogen peroxide and hydrazine.

### MEANS FOR SOLVING PROBLEM

The present inventors have completed the present invention by focusing on the fact that, in preparing an absorbing solution to be introduced into an IC analyzer, electrolysis enables oxidation or reduction of ions in the absorbing solution without using highly hazardous reagents such as hydrogen peroxide or hydrazine.

Specifically, the present inventors have found that the aforementioned problems can be solved by using an absorption tube equipped with electrodes for electrolysis during the preparation of an absorbing solution, and electrolyzing the absorbing solution accommodated in the absorption tube during or after the absorption of the combustion decomposition gas, thereby oxidizing sulfite ions to sulfate ions and reducing free halogens or halogen oxoacid ions, converting all sulfur compounds to sulfate ions and halogen compounds to halide ions, followed by introducing the resulting solution into an IC analyzer, which led to the present invention.

That is, in order to solve the aforementioned problems, the sample analysis method according to the present invention is characterized in that, in analyzing sulfur and/or halogens contained in a sample using an analyzer, sulfur compounds and halogen compounds generated by combusting and decomposing the sample are recovered in an absorbing solution, and the sulfur compounds and halogen compounds contained in the absorbing solution are oxidized or reduced by electrolysis before being subjected to analysis.

Furthermore, the solution preparation device according to the present invention is characterized in that, in analyzing sulfur and/or halogens contained in a sample using an ion chromatograph, sulfur compounds and halogen compounds generated by combusting and decomposing the sample are recovered in an absorbing solution accommodated in an absorption tube equipped with electrodes for electrolysis, and the sulfur compounds and halogen compounds contained in the absorbing solution are oxidized or reduced by electrolysis within the absorption tube before being subjected to analysis.

The aforementioned sample analysis method and solution preparation device can be applied to the analysis of a sample using an IC analyzer. The present invention can also be applied to other analyzers that substitute for the IC analyzer.

As described above, the electrolysis of the absorbing solution is carried out within the absorption tube equipped with electrodes. The electrodes used for electrolysis can be made of platinum or a platinum alloy. The electrodes are composed of a pair of anode and cathode, and a diaphragm made of a glass filter, a ceramic filter, an ion-exchange membrane, or the like is installed between the two electrodes within the absorption tube to partition the inside of the absorption tube via the diaphragm. One of the electrodes is placed so as to be in liquid contact with the absorbing solution into which the combustion decomposition gas is blown, and the other is placed in a counter electrode vessel within the absorption tube connected across the diaphragm. The counter electrode vessel is filled with an electrolyte solution such that electricity can be applied.

The electrode in liquid contact with the absorbing solution switches polarity to serve as an anode or cathode to oxidize or reduce the target components in the absorbing solution. In some cases, the diaphragm is not required between the two electrodes when oxidizing sulfite ions to sulfate ions.

The electrolyte is added to the absorbing solution to allow electricity to flow. The electrolyte may be any component as long as it does not affect the measurement of the target components by IC. However, it is desirable that the component is one used as an eluent for IC, such as a hydroxide or carbonate.

### EFFECT OF THE INVENTION

According to the present invention, analysis work can be carried out safely because dangerous and harmful reagents such as hydrogen peroxide and hydrazine are not used. Also, there is no need for the effort required to manage the reagents. Furthermore, interference during measurement is eliminated, enabling highly accurate IC analysis.

### BRIEF DESCRIPTION OF DRAWINGS

FIG. 1 is a diagram showing a schematic configuration of an embodiment of a solution preparation device for carrying out a sample analysis method according to the present invention.
FIG. 2 is a diagram showing a schematic configuration of the absorption tube shown in FIG. 1.
FIG. 3 is a chromatogram showing the analysis results of the absorbing solution in Example 2, in which electrolysis is not carried out.
FIG. 4 is a chromatogram showing the analysis results of the absorbing solution in Example 2, in which electrolysis is carried out.
FIG. 5 is a diagram showing the results of measuring a solution containing neither hydrogen peroxide nor hydrazine using an ion chromatograph.
FIG. 6 is a diagram showing the results of measuring a solution containing hydrogen peroxide using an ion chromatograph.
FIG. 7 is a diagram showing the results of measuring a solution containing hydrazine using an ion chromatograph.

### MODE(S) FOR CARRYING OUT THE INVENTION

The following describes a preferred embodiment of the solution preparation device according to the present invention based on the drawings.

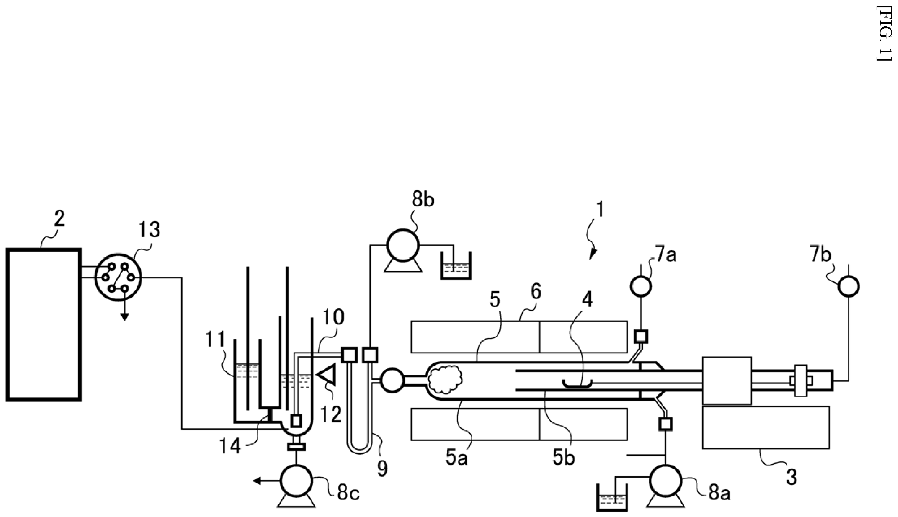

FIG. 1 shows a schematic configuration of a device for quantitatively analyzing sulfur and/or halogens contained in a sample using an IC analyzer, in which reference numeral 1 denotes a solution preparation device and reference numeral 2 denotes an IC analyzer. The solution preparation device 1 has a known device configuration except that an absorption tube 11 accommodating an absorbing solution is provided with a function of electrolyzing the absorbing solution as described later.

In the illustrated device configuration, a solution is prepared as follows.

Initially, a sample is introduced from a sample inlet device 3 into a sample port 4, and then transferred into a reaction tube 5 configured by an outer tube 5a and an inner tube 5b. The transferred sample is then heated and combusted in an electric furnace 6, which is a heating means.

Oxygen and a carrier gas such as argon are supplied into the reaction tube 5 by flow rate regulators 7a and 7b, respectively, in appropriate amounts. Simultaneously, water is supplied from a water pump 8a to provide sufficient water vapor within the reaction tube 5, and these oxygen, inert gas, and water vapor are introduced into the reaction region within the reaction tube 5.

The sample is thermally decomposed within the reaction tube 5 to generate a sample gas. The generated sample gas is fed from the reaction tube 5 to a solution absorption tube 9, and then absorbed into an absorbing solution supplied from a water pump 8b within the solution absorption tube 9. The absorbing solution is then injected via a blowing tube 10 into an absorption tube 11 and accommodated therein.

The operations, including the combustion of the sample, the generation and feeding of the sample gas to the solution absorption tube 9, the injection of the absorbing solution, the absorption of the sample gas, and the subsequent injection into the absorption tube 11, are automatically controlled by a control device configured by a computer loaded with a predetermined control program.

The absorbing solution is injected into the absorption tube 11 where electrolysis is carried out. The sample gas is blown therein, and oxidation or reduction is carried out. Upon completion of the combustion, water is injected up to a liquid level sensor 12 to maintain a constant volume of the absorbing solution within the absorption tube 11.

The oxidized or reduced absorbing solution is then introduced into an IC analyzer 2 via a sample injector 13, and the content of sulfur and/or halogens in the sample is analyzed. In the figure, reference numeral 8c denotes a pump for discharging the absorbing solution from the absorption tube 11.

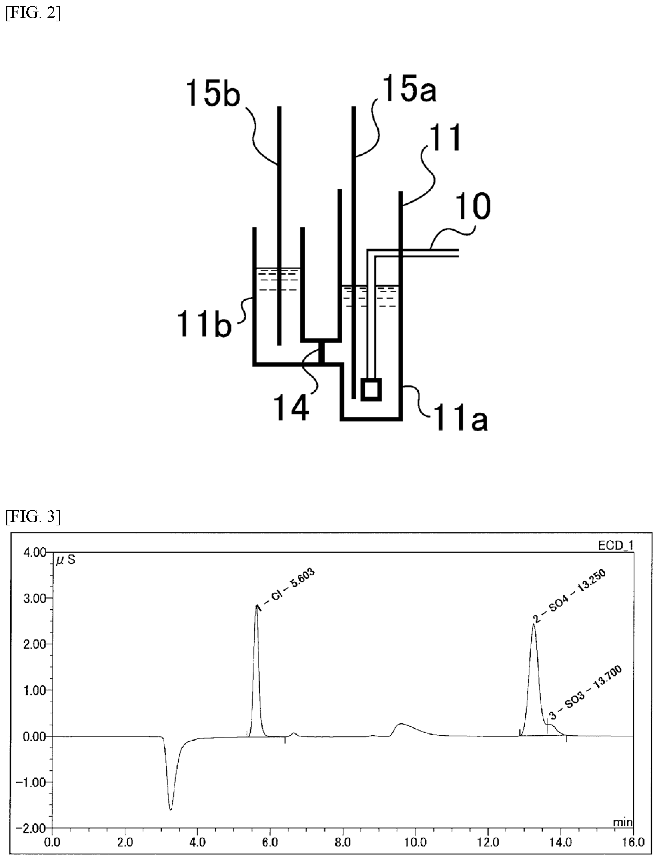

FIG. 2 shows a schematic configuration of the absorption tube 11 accommodating the absorbing solution.

In the figure, the absorption tube 11 has a vessel 11a in which the blowing tube 10, which blows the sample gas fed from the reaction tube 5 and the absorbing solution that has absorbed the gas, is in contact with the absorbing solution, and a counter electrode vessel 11b that accommodates an electrolyte solution. The two vessels are connected and communicated via a diaphragm 14 at their lower portions, and a pair of electrodes 15a and 15b, consisting of an anode and a cathode, are installed inside both vessels, with the accommodating solution immersed in and in contact with both electrodes 15a and 15b, respectively. The vessel 11a, into which the absorbing solution is injected from the blowing tube 10, is provided with an electrolyte solution.

The electrolysis of the accommodating solution accommodated in the absorption tube 11 is carried out by passing electricity through the pair of electrodes 15a and 15b, and switching the polarity of the electrode 15b in the vessel 11a, where the blowing tube 10 is in contact with the absorbing solution, to act as either an anode or cathode, thereby oxidizing or reducing target components in the absorbing solution.

### EXAMPLES

The effectiveness of the sample analysis method according to the present invention was confirmed by quantitative analysis of the samples.

### (Example 1)

Using p-bromoacetanilide (Br: 37.33%) as a sample, an absorbing solution was prepared using the solution preparation device shown in FIGS. 1 and 2, and this solution was then introduced into a combustion ion chromatograph to analyze the content of bromine in the absorbing solution.

Two types of absorbing solutions were prepared for analysis: one that was subjected to reduction treatment by electrolysis in the absorption tube, and one that was not subjected to electrolysis. The content of bromine was analyzed for each to confirm the difference in the analysis results between the two absorbing solution preparation methods. The electrolysis was carried out by applying a voltage of 10 V to the pair of electrodes and passing a current of approximately 10 mA within the vessel accommodating the absorbing solution and the electrolyte solution. Under these conditions, the electrolysis can oxidize sulfite ions to sulfate ions in approximately 8 to 10 minutes.

The analysis results are shown in Table 1.

**[Table 1]**

| | First time Content (%) | Second time Content (%) | Average value (%) | Recovery rate |
|---|---|---|---|---|
| Without electrolysis | 30.2 | 29.9 | 30.1 | 81% |
| With electrolysis | 36.1 | 37.7 | 36.9 | 99% |

As shown in Table 1, the recovery rate of bromine contained in the absorbing solution was relatively high even when the absorbing solution prepared in the solution preparation device was introduced directly into the combustion ion chromatograph for analysis. However, it was confirmed that the recovery rate of nearly 100% could be obtained when the absorbing solution was subjected to reduction treatment by electrolysis within the absorption tube.

### (Example 2)

Using an ethanol solution of S-benzylthiuronium chloride (S: 136.6 µg/mL) as a sample, an absorbing solution was prepared using the solution preparation device in the same manner as in Example 1, and this solution was then introduced into a combustion ion chromatograph to analyze the content of sulfur in the absorbing solution.

Two types of absorbing solutions were prepared for analysis: one that was subjected to oxidation treatment by electrolysis in the absorption tube under the same conditions as above, and one that was not subjected to electrolysis. The content of sulfur was analyzed for each to confirm the difference in the analysis results between the two absorbing solution preparation methods. The results are shown in Table 2.

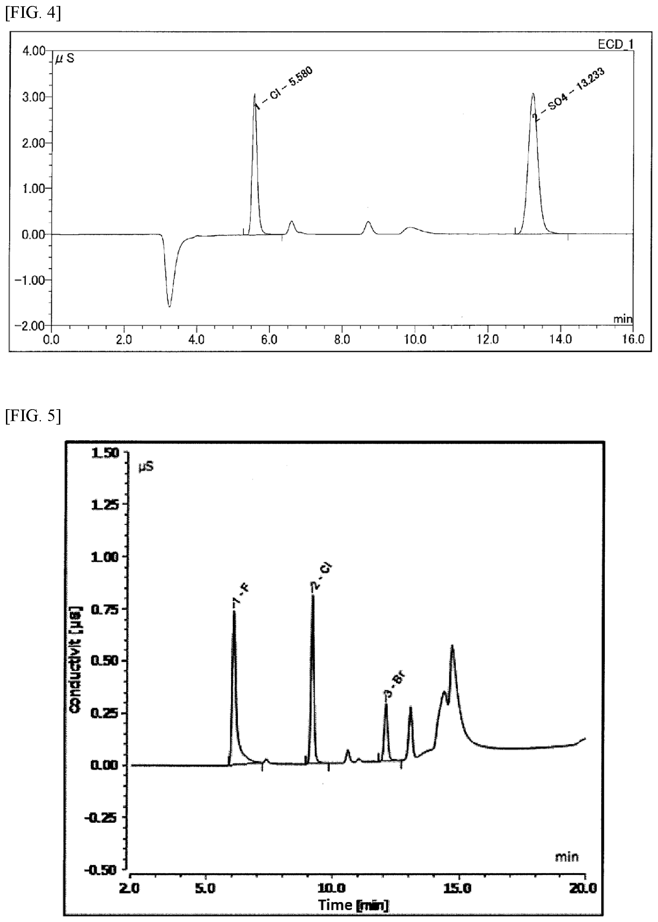

The chromatogram representing the analysis results of the absorbing solution without electrolysis is shown in FIG. 3; and the chromatogram representing the analysis results of the absorbing solution with electrolysis is shown in FIG. 4.

**[Table 2]**

| | First time Content (µg/mL) | Second time Content (µg/mL) | Average value (µg/mL) | Recovery rate |
|---|---|---|---|---|
| Without electrolysis | 101.8 | 106.9 | 104.3 | 76% |
| With electrolysis | 137.9 | 136.3 | 137.1 | 100% |

As shown in Table 2, it was confirmed that the recovery rate of 100% could be obtained when the absorbing solution was subjected to oxidation treatment by electrolysis within the absorption tube.

Furthermore, as shown in FIG. 3, an elution peak of sulfite ions was confirmed in the absorbing solution without electrolysis, whereas as shown in FIG. 4, the peak of sulfite ions disappeared in the absorbing solution with electrolysis, confirming that all had been oxidized to sulfate ions.

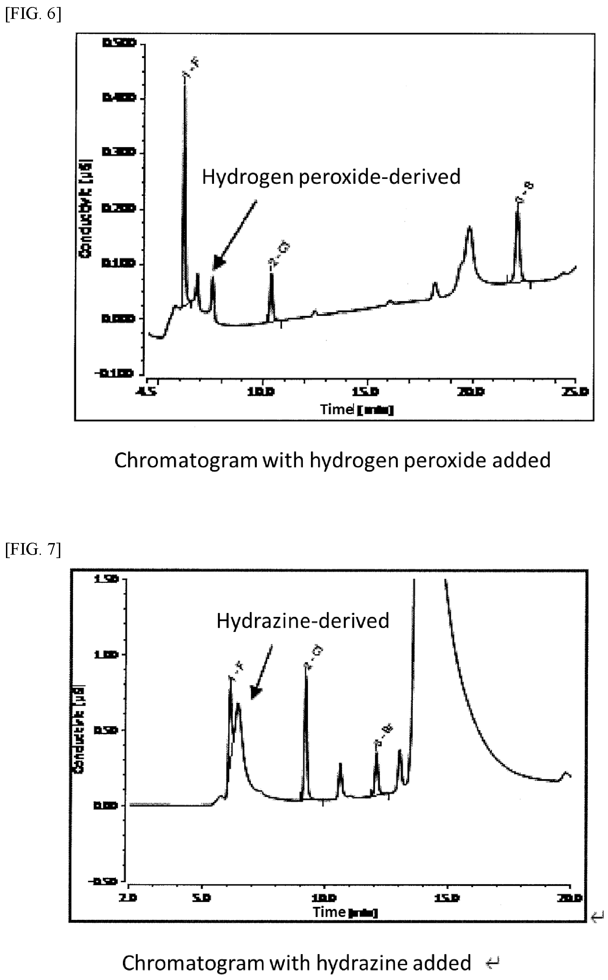

For reference, the following shows examples where hydrogen peroxide and hydrazine interfere with the measurement of fluoride ions. FIG. 5 shows an example of measuring a solution containing neither hydrogen peroxide nor hydrazine using an ion chromatograph; FIG. 6 shows an example of measuring a solution containing hydrogen peroxide; and FIG. 7 shows an example of measuring a solution containing hydrazine.

Adding hydrogen peroxide or hydrazine to the absorbing solution and measuring the solution using an IC analyzer resulted in the appearance of signals derived from these components on the chromatograms as shown in FIGS. 6 and 7, and accurate analysis results could not be obtained. Meanwhile, subjecting the absorbing solution to oxidation-reduction treatment by electrolysis did not result in the appearance of signals derived from the components, confirming the possibility of accurate measurement and analysis.

The device configurations and component forms described and illustrated above are merely examples, and the present invention is not limited to the configurations and forms described and illustrated, but can be implemented in other appropriate configurations and forms.

The present invention is applicable as a method and device for preparing a solution for various analyzers that use a calibration curve to quantitatively analyze unknown components contained in a sample, including an IC analyzer.

### EXPLANATIONS OF LETTERS OR NUMERALS

1 Solution preparation device, 2 IC analyzer, 3 Sample inlet device, 4 Sample port, 5 Reaction tube, 6 Electric furnace, 7a and 7b Flow rate regulators, 8a, 8b, and 8c Pumps, 9 Solution absorption tube, 10 Blowing tube, 11 Absorption tube, 12 Liquid level sensor 1, 13 Sample injector, 14 Diaphragm, 15a and 15b Electrodes

## Claims

1. A sample analysis method for analyzing sulfur and/or halogens contained in a sample using an analyzer, comprising:
recovering sulfur compounds and halogen compounds generated by combusting and decomposing the sample into an absorbing solution; and oxidizing or reducing the sulfur compounds and halogen compounds contained in the absorbing solution by electrolysis before being subjected to analysis.

2. The sample analysis method according to claim 1, wherein the analyzer is an ion chromatograph analyzer.

3. A solution preparation device for analyzing sulfur and/or halogens contained in a sample using an ion chromatograph, comprising
a mechanism configured to recover sulfur compounds and halogen compounds generated by combusting and decomposing the sample into an absorbing solution accommodated in an absorption tube equipped with electrodes for electrolysis, and to oxidize or reduce the sulfur compounds and halogen compounds contained in the absorbing solution by electrolysis within the absorption tube before being subjected to analysis.

4. The solution preparation device according to claim 3, wherein the oxidized or reduced solution is introduced into an ion chromatograph analyzer.
